# EUROPÄISCHE PATENTANMELDUNG

(11) **EP 1 243 238 A1**
(43) Veröffentlichungstag der Anmeldung: **25.09.2002**
(21) Anmeldenummer: 01106853.3
(22) Anmeldetag: 19.03.2001
(51) Int. Cl.: A61G 7/08, A61G 7/00, B60B 33/00, B60B 33/02

(54) **Bett mit drehbar gelagerten Tragrollen**

(71) Anmelder: Hermann Bock GmbH, 33415 Verl (DE)
(72) Erfinder: Bock, Ernst, 33415 Verl (DE)
(74) Vertreter: Stenger, Watzke & Ring Patentanwälte

(57) **Zusammenfassung**

Die Erfindung betrifft ein Bett (13), insbesondere ein Kranken- und/oder Pflegebett, mit zumindest um die Längsachse drehbar gelagerten Tragrollen (1). Um ein solches Bett dahingehend zu verbessern, daß bei gleichzeitiger Vereinfachung der Bedienung der Feststellbremsen eine auch unter erschwerten Bedingungen verbesserte Standsicherung des Bettes erreicht wird, wird mit der Erfindung ein Bett vorgeschlagen, das gekennzeichnet ist durch eine mittels Motor antreibbare und auf wenigstens zwei Tragrollen zugleich einwirkende Feststellbremse.

## Beschreibung

Die Erfindung betrifft ein Bett, insbesondere ein Kranken- und/oder Pflegebett, mit zumindest um die Längsachse drehbar gelagerten Tragrollen.

Derlei Betten sind aus dem Stand der Technik in vielfacher Ausgestaltung bekannt. Eingesetzt werden dabei sowohl Tragrollen, die ausschließlich um ihre Längsachse als auch zusätzlich um ihre Hochachse drehbar gelagert sind. Insbesondere im Kranken- und/oder Pflegebereich ist der Einsatz von mit drehbar gelagerten Tragrollen versehenen Betten von Vorteil, da hierdurch dem Pflegepersonal die Möglichkeit eröffnet wird, Betten auf einfache und vor allem wenig Kraft aufwendige Weise zu verrücken oder zu verschieben.

Um gleichwohl sicherstellen zu können, daß mit Tragrollen ausgestattete Betten nicht ungewollt verschoben bzw. verrückt werden oder sogar unkontrolliert umherrollen, ist es aus dem Stand der Technik bekannt, eine jede Tragrolle mit einer Feststellbremse auszurüsten. Im Regelfall ist die Feststellbremse angezogen und verhindert so eine Drehbewegung der Rolle. Im Bedarfsfall, wenn also das Bett verschoben oder verrückt werden soll, ist eine jede Feststellbremse vom Bedienpersonal zu lösen. Im gelösten Zustand der Feststellbremsen ist die Drehbewegung der Tragrollen freigegeben, so daß das Bett auf einfache Weise vom Personal verschoben werden kann. Ist die gewünschte Position des Bettes schließlich erreicht, so kann das Bett erneut gegen eine unerwünschte Verschiebung gesichert werden, indem nämlich sämtliche Feststellbremse wieder festgestellt werden.

Zur Vermeidung anstrengender und bei dauerhafter Wiederholung unter Umständen auch gesundheitsgefährdender Bückbewegungen des Personals, haben sich in der Praxis insbesondere solche Feststellbremsen durchgesetzt, die mit dem Fuß bedient werden können. Zumeist sind solche Feststellbremsen als einfache Kipphebel ausgebildet, die durch ein Herunterdrücken des rollenabgewandten Teils des Hebels gelöst und durch eine entsprechende Gegenbewegung wieder gesichert werden können.

Bei den vorbeschriebenen Betten ist insbesondere der Umstand von Nachteil, daß jede einzelnen Tragrolle mittels einer eigenen, separat zu bedienen Feststellbremse zu sichern ist. Nicht nur, daß hierdurch ein erhöhter Bedienaufwand erforderlich ist, ein nicht freistehendes, beispielsweise ein mit einer Bettseite an eine Wand geschobenes Bett kann überhaupt nur unzureichend gesichert werden, da die wandseitig angeordneten Feststellbremsen des Bettes für das Bedienpersonal nicht zugänglich sind. Dies gilt insbesondere für den Fall, daß das Bett in die Raumecke eines Raumes verschoben wird und mithin zwei Seiten des Bettes in Wandkontakt stehen. In diesem Fall ist die Feststellbremse nur noch einer Tragrolle, nämlich der Tragrolle, die der Raumecke über die Bettdiagonale gegenüberliegt, frei zugänglich. Die direkt in der Raumecke befindliche Feststellbremse ist gar nicht mehr und die beiden übrigen Feststellbremsen sind, wenn überhaupt, dann nur noch eingeschränkt zugänglich. Eine umfassende Sicherung des Bettes kann somit nicht sichergestellt werden.

Der Erfindung liegt daher die Aufgabe zugrunde, unter Vermeidung der vorgenannten Nachteile ein Bett, insbesondere ein Kranken- und/oder Pflegebett, dahingehend zu verbessern, daß bei gleichzeitiger Vereinfachung der Bedienung der Feststellbremsen eine auch unter erschwerten Bedingungen verbesserte Standsicherung des Bettes erreicht wird.

Die technische **Lösung** dieser Aufgabe ist gekennzeichnet durch eine mittels Motor antreibbare und auf wenigstens zwei Tragrollen zugleich einwirkende Feststellbremse.

Mit dieser erfindungsgemäßen Ausgestaltung wird einerseits der Bedienaufwand zur Festlegung und Sicherung sämtlicher Tragrollen erheblich verringert, andererseits wird unabhängig von der Zugänglichkeit einzelner Tragrollen bzw. deren Feststellbremsen eine umfängliche Sicherung des Bettes gewährleistet. Die auf wenigstens zwei Tragrollen zugleich einwirkende Feststellbremse kann in vorteilhafter von zentraler Stelle aus bedient werden, so daß mit nur einer einzigen Hand- oder Fußbewegung der Antriebsmotor für die Feststellbremse in Gang gesetzt werden kann, wodurch mehrere Tragrollen zugleich gesichert sind. Die Betätigung einer jeden einzelnen Feststellbremse einer jeden Tragrolle entfällt, womit die Bedienung insgesamt vereinfacht wird.

Von weiterem Vorteil ist zudem, daß die Festlegung mehrere Tragrollen über eine gemeinsame Feststellbremse die insgesamt zu erzielende Standsicherung deutlich erhöht. Ist die Standsicherung bei den aus dem Stand der Technik bekannten Einrichtungen noch in ganz entscheidendem Maße von der Position des Bettes im Verhältnis zu den einen Raum bildenden Wänden, d.h. von der Möglichkeit des Zugangs zu den einzelnen Feststellbremsen, abhängig, so erlaubt die erfindungsgemäße Ausgestaltung einen weit aus verbesserten Zugang. Auch für den Fall, daß eine Tragrolle als solche nur schwer oder überhaupt nicht zugänglich ist, die Feststellbremse für die jeweilige Rolle kann gleichwohl bedient werden.

Hinzu kommt, daß bei solchen Betten, die in der Höhe verstellbar sind und eine Schrägstellung des kompletten Bettes ermöglichen, der horizontale Abstand der Tragfüße und damit auch der Tragrollen je nach Neigungswinkel des Bettes variiert. Um den Vorgang einer Höhenverstellung dieser Art zu unterstützen und um Beschädigungen des Untergrunds, beispielsweise des Teppichbodens, infolge einer stumpfen Verschiebung des einen Tragfußes gegenüber dem anderen Tragfuß zu vermeiden, sind die Tragrollen paarweise freizugeben bzw. festzusetzen. Mit der erfindungsgemäßen Ausgestaltung kann dies auf einfache und zuverlässige Weise durchgeführt werden und so können im Rahmen einer Schrägstellung eines höhenverstellbaren Bettes, mit der eine Abstandsänderung zwischen den Tragfüßen des Bettes einher geht, zur Sicherung des Bettes die Tragrollen des einen Tragfußes festgelegt und die Tragrollen des anderen Tragfußes gelöst werden. Auf diese Weise kann ohne jeden großen Aufwand eine sicher Schrägstellung des Bettes gewährleistet werden, und zwar auch dann, wenn das Bett an eine Raumwand gestellt ist und die wandseitigen Tragrollen nicht zugänglich sind. Nach einer erfolgten Schrägstellung können die beiden gelösten Tragrollen des einen Tragfußes dann wieder mittels der gemeinsamen Feststellbremse auf einfache Weise zugleich gesichert werden.

Erfindungsgemäß ist die Feststellbremse mittels eines Motors, vorzugsweise eines Elektromotors, angetrieben. Zum einen erleichtert dies die Bedienung der Feststellbremse, zum anderen wird materialschonend mit stets gleich reproduzierbarer Motorkraft die Festsetzung der Tragrollen durch die Feststellbremse bewirkt. Eine weiterer Vorteil ergibt sich daraus, daß der Motor unabhängig von seinem Anbringungsort auch über eine Fernbedingung gesteuert werden kann. Für das Bedienpersonal verringert sich so insbesondere bei solchen Betten, die in eine Schrägstellung verfahren werden können, deutlich der Bedienaufwand. Bei den aus dem Stand der Technik bekannt Betten ist eine Bedienperson während des Schrägstellvorgangs zumeist auf die Hilfe einer weiteren Person angewiesen, um ein ungewolltes Verrollen des Bettes während des Vorgangs des Schrägstellens sicher verhindern zu können; mit Verwendung der erfindungsgemäßen Ausgestaltung kann hingegen die Schrägstellung des Bettes, ohne die Hilfe einer weiteren Person bewerkstelligt werden. Vorzugsweise sind die Bedienelemente zur Höhenverstellung und Schrägstellung des Betts zusammen mit entsprechenden Bedienelementen zur Betätigung des Feststellbremsen in einer gemeinsamen Bedieneinheit zusammengefaßt. Zudem kann eine elektronische Schalteinheit vorgesehen sein, die bei einer Schrägstellung des Bettes automatisch die Feststellbremse löst und die entsprechenden Tragrollen freischaltet. Ist die Schrägstellung des Bettes beendet, so wird die Feststellbremse automatisch wieder festgestellt und die Tragrollen blockiert. Um zu vermeiden, daß nicht autorisierte Personen, beispielsweise der Patient selbst, die Feststellbremse lösen und/oder feststellen bzw. die Schrägstellung in Verwendung nehmen kann, sind die hierfür vorgesehen Wahlschalter der Steuereinheit gesperrt und werden ausschließlich bei entsprechenden Autorisierung freigegeben. Alternativ hierzu kann eine am Bett separat angeordnete Kontrollbox vorgesehen sein, über welche nur dann eine Steuerung von Feststellbremse und Schrägstellungsmechanismus möglich ist, wenn sich niemand im Bett befindet.

Gemäß einem besonderen Merkmal der Erfindung ist vorgesehen, daß mehrere Tragrollen zu einer Tragrolleneinheit zusammengefaßt sind und für jede Tragrolleneinheit jeweils eine Feststellbremse vorgesehen ist. Dabei können je nach Gesamtanzahl der Tragrollen zwei, drei oder auch noch weitere Tragrollen zu einer gemeinsamen Tragrolleneinheit zusammengefaßt und durch nur eine Feststellbremse gesichert werden. Insbesondere eignet sich die paarweise Zusammenfassung von Tragrollen, wobei je nach Lage der einzelnen Tragrollen, diejenigen zusammengefaßt werden können, die in Liegerichtung oder quer zur Liegerichtung des Bettes hintereinander bzw. einander gegenüberliegend angeordnet sind.

Für jede Feststellbremse ist gemäß einem weiteren Merkmal der Erfindung jeweils ein separat steuerbarer Antriebsmotor vorgesehen. In vorteilhafter Weise wird hierdurch die bedarfsgerechte und auf den jeweiligen Anwendungsfall abstimmbare Feststellung und/oder Lösung einzelner Tragrolleneinheiten ermöglicht. Alternativ hierzu kann auch vorgesehen sein, daß ein für sämtliche Feststellbremsen gemeinsamer Antriebsmotor vorgesehen ist, wobei dann jede Feststellbremse jeweils über einen aus Getriebe und/oder Kupplung bestehenden Antriebsstrang separat steuerbar ist. Unabhängig von der gewählten Alternative sollte jedoch gemäß einem weiteren Vorschlag der Erfindung sichergestellt sein, daß eine für eine Bedienperson leicht zugängliche Steuereinheit vorgesehen ist, mittels derer die Feststellung und/oder die Lösung der Feststellbremse steuerbar ist.

Typischer Weise verfügen herkömmliche Betten, insbesondere Kranken- und/oder Pflegebett, über vier Tragrollen, die jeweils mittels einer entsprechenden Feststellbremse festgestellt und wieder gelöst werden können. Die Erfindung ermöglicht nunmehr von zentraler Stelle aus, sämtliche Tragrollen zugleich anzusteuern, was nicht nur komfortabel für das Bedienpersonal ist, auch wird durch diese Maßnahme die Standsicherheit verbessert. Bevorzugterweise sind jeweils zwei Tragrollen zu einer gemeinsamen Tragrolleneinheit zusammengefaßt und bilden zusammen mit einer mittels Motor angetriebenen Feststellbremse eine Bremseinheit. Jedes Bett verfügt dann über zwei körperlich von einander getrennte und mithin unabhängige Bremseinheiten. Diese Art der Aufteilung ist insbesondere für solche Betten von Vorteil, die komplett schräg gestellt werden können. Vorzugsweise sind die beiden Bremssystem über eine gemeinsame Steuereinheit miteinander gekoppelt und können von einer zentralen Stelle aus angesteuert und betätigt werden. Dies eröffnet den Vorteil, die erfindungsgemäße Bremseinheit auf einfache Weise und komfortabel bedienen zu können.

Gemäß einem weiteren Merkmal der Erfindung ist vorgesehen, daß die Feststellbremse eine drehbar gelagerte Welle aufweist, die im Bereich ihrer beiden längsseitigen Endabschnitte kraftübertragend an jeweils einen die Drehbewegung der Tragrolle blockierenden Druckbolzen gekoppelt ist. Diese Art der Ausgestaltung stellt in vorteilhafter eine robuste und den in der Praxis alltäglich auftretenden Belastungen gerecht werdende Konstruktion dar. Die Welle kann mittels bereits vorbeschriebenem Motor in eine Drehbewegung, sowohl in ein Links- als auch in Rechtsdrehbewegung versetzt werden. Je nach Ausgangslage dient dann beispielsweise die Linksdrehbewegung dem Lösen der jeweiligen Tragrollen, wohingegen eine Rechtsdrehbewegung ein Feststellen bewirkt. Die im Bereich der beiden längsseitigen Endabschnitte der Welle kraftübertragend angekoppelten Druckbolzen werden infolge der Drehbewegung der Welle in eine axial geführte Auf- und Abwärtsbewegung überführt. Befindet sich dabei ein Druckbolzen in einer unteren Position, so blockiert er die jeweilige Tragrolle. Befindet er sich hingegen in einer oberen Position, so gibt er die Tragrolle frei. Vorzugsweise ist jeder Druckbolzen mit entspannenden Zugfeder versehen, die ihn in einer oberen Position hält, solange nicht entgegen der Federkraft eine durch eine Drehbewegung der Welle bedingte Abwärtsbewegung des Druckbolzens ausgelöst wird. Vorzugsweise ist die Welle als Exzenterwelle ausgebildet ist. Andere Ausbildungsformen sind gleichfalls möglich, wobei entscheidend ist, daß die Drehbewegung der Welle in eine translatorische Bewegung der Druckbolzen überführt wird.

Gemäß einem weiteren Merkmal der Erfindung sind die Druckbolzen tragrollenseitig mit jeweils einer Bremsbacke versehen. Hierdurch wird einerseits der Bremseffekt verstärkt, andererseits wird zugleich eine Materialschonung bewirkt. Dabei ist die Bremsbacke vorzugsweise als auswechselbarer Gummiklotz ausgebildet, dessen Bremsfläche im wesentlichen korrespondierend zur Außenkontur der Tragrolle, d.h. sphärisch ausgebildet ist.

Gemäß einer alternativen Ausgestaltungsform der Erfindung ist vorgesehen, daß die Feststellbremse eine drehbar gelagerte Sechskant-Welle aufweist, die im Bereich ihrer beiden längsseitigen Endabschnitte kraftübertragend an jeweils einen mit einem Bremsmittel versehen und in radialer Richtung zur Tragrolle gleitend gelagerten Führungsstift gekoppelt ist. Der Führungsstift weist dabei an seinem der Sechskant-Welle gegenüberliegendem Ende ein Bremsmittel auf, das ebenso wie der Führungsstift in Höhenrichtung verschiebbar gelagert ist und den durch den Führungsstift vorgegebenen Bewegungen folgt. Gemäß einem besonderen Vorschlag der Erfindung wirken die Bremsmittel innenseitig auf korrespondierend ausgebildete Bremsfläche der Tragrollen ein. Diese Anordnung hat den Vorteil, daß das Bremsmittel sowie auch der Führungsstift vor äußeren Einflüssen, wie z.B. vor Staub und Dreck einerseits sowie vor mechanischen Schlageinwirkungen und der dergleichen andererseits, geschützt angeordnet sind.

Weiter Vorteile und Merkmale der Erfindung ergeben sich aus der Beschreibung anhand der Zeichnung. Dabei zeigen:
- Figur 1:: eine schematische Seitenansicht einer Tragrolle mit einer erfindungsgemäßen Feststellbremse gemäß einer ersten Ausführungsform;
- Figur 2:: eine schematische Draufsicht auf eine erfindungsgemäße Feststellbremse gemäß einer ersten Ausführungsform;
- Figur 3:: eine Seitenansicht einer Tragrolle mit einer erfindungsgemäßen Feststellbremse gemäß einer zweiten Ausführungsform;
- Figur 4:: eine Draufsicht von oben einer Tragrolle mit einer erfindungsgemäßen Feststellbremse gemäß einer zweiten Ausführungsform;
- Figur 5:: eine geschnittene Seitenansicht einer Tragrolle mit einer erfindungsgemäßen Feststellbremse gemäß einer zweiten Ausführungsform;
- Figur 6:: eine Draufsicht von vorne einer Tragrolle mit einer erfindungsgemäßen Feststellbremse gemäß einer zweiten Ausführungsform;
- Figur 7:: eine schematische Seitenansicht eines in der Höhe verfahrbaren Bettes gemäß einer ersten Höhenstellung und
- Figur 8:: eine schematische Seitenansicht eines in der Höhe verfahrbaren Bettes gemäß einer zweiten Höhenstellung.

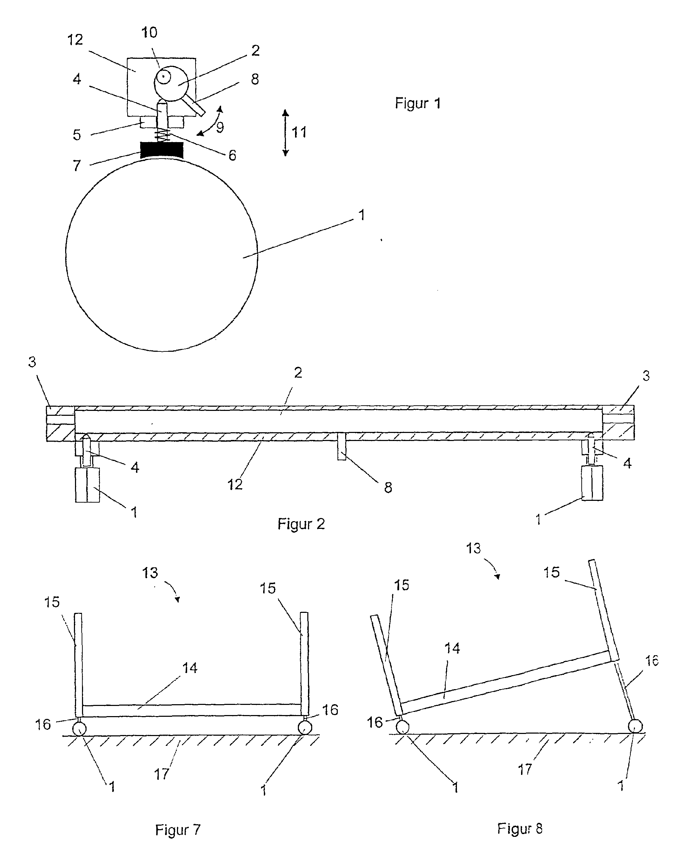

Figur 1 zeigt in einer schematischen Seitenansicht eine um die Längsachse drehbar gelagerte Tragrolle 1 eines Bettes, insbesondere eines Kranken- und/oder Pflegebettes 13. Um ein ungewolltes Verdrehen der Tragrolle 1 unterbinden zu können, ist diese mit einer Feststellbremse versehen, wobei die Feststellbremse erfindungsgemäß derart ausgelegt ist, daß sie auf wenigstens zwei Tragrollen 1 zugleich einwirkt.

Die Feststellbremse besteht aus einer exzentrisch gelagerten Welle 2, die im Bereich ihrer beiden längsseitigen Endabschnitte kraftübertragend an jeweils einen die Drehbewegung der Tragrolle 1 blockierenden Druckbolzen 4 gekoppelt ist. Der Druckbolzen 4 weist tragrollenseitig einen Bremsklotz 7 auf, der vorzugsweise als Vollgummiblock ausgebildet ist und dessen Bremsfläche korrespondierend zur Außenkontur der Tragrolle ausgebildet ist. Vorzugsweise ist der Bremsklotz 7 auswechselbar am Druckbolzen 4 angeordnet.

Geführt ist der Druckbolzen 4 in einem Bolzenlager 5. Das Bolzenlager 5 ermöglicht eine translatorische Bolzenbewegung 11, die in Richtung auf die Tragrolle 1 bzw. entgegengesetzt hierzu ausgerichtet ist. in der in Figur 1 dargestellten Situation befindet sich der Druckbolzen 4 samt Bremsklotz 7 in einer oberen Position. Ein Kontakt zwischen Bremsklotz 7 und Tragrolle 1 besteht nicht. Die Tragrolle 1 ist mithin durch die Feststellbremse nicht gesichert und kann eine entsprechende Drehbewegung durchführen. Die obere Lage des Druckbolzens 4 wird durch die den Druckbolzen 4 entlastende Feder 6 sichergestellt, die als Zugfeder ausgebildet ist und bei nicht festgestellter Bremse den Druckbolzen 4 in die in Figur 1 gezeigte obere Stellung verfährt.

Für ein Blockieren der Tragrolle 1 ist der Druckbolzen 4 entsprechend der Bolzenbewegung 11 herunter in eine untere Position so zu verfahren, daß der Bremsklotz 7 auf der Tragrolle 1 aufliegt. Zum diesem Zweck ist die exzentrisch gelagerte Welle 2 um den Drehpunkt 10 herum entsprechend der Drehbewegung 9 zu verdrehen. Als Anlenkarm dient Dreharm 8, der bevorzugter Weise mittels eines in dieser Figur nicht dargestellten Elektromotors angetrieben wird.

Wird die Welle 2 dem Uhrzeigersinn folgend entsprechend der Drehbewegung 9 verfahren, so wirkt sie auf das tragrollenentfernte Ende des Druckzapfens 4 ein und bewirkt entgegen der Federkraft der Feder 6 eine Abwärtsbewegung des Druckbolzens 4. Dabei wird der Bremsklotz 7 auf die Tragrolle gedrückt, wodurch diese in ihrer Drehbewegung gehindert wird. Um die Feststellbremse wieder zu lösen, ist die Welle 2 gegen den Uhrzeigersinn zu verfahren. Der Druckbolzen 4 wird dann nicht mehr von der Welle 2 niedergehalten, so daß dieser infolge der wirkenden Federkraft zurück in seine obere Stellung verfährt. Zum Zwecke der Sicherheit ist die Welle 2 innerhalb eines Gehäuses 12 angeordnet.

Figur 2 zeigt die erfindungsgemäße Feststellbremse in einer schematischen Draufsicht. Gut zu erkennen ist hier, daß die Feststellbremse zugleich auf zwei Tragrollen 1, die zusammen eine Tragrolleneinheit bilden, einwirkt. Sowohl der eine Endabschnitt als auch der andere Endabschnitt der Welle 2 ist kraftübertragend an jeweils einen Druckbolzen 4 gekoppelt. Bei einer Drehbewegung der Welle 2 werden somit beide Druckbolzen zugleich niedergedrückt und bremsen bzw. stellen die jeweilige Tragrolle 1 fest. Die Welle 2 ist mittels Wellenlager 3 drehbar gelagert innerhalb des Gehäuses 12 angeordnet. Angelenkt wird die Welle 2 vorzugsweise über einen an einen Elektromotor sowie wahlweise an ein Getriebe und/oder eine Kupplung angeschlossen Dreharm 8.

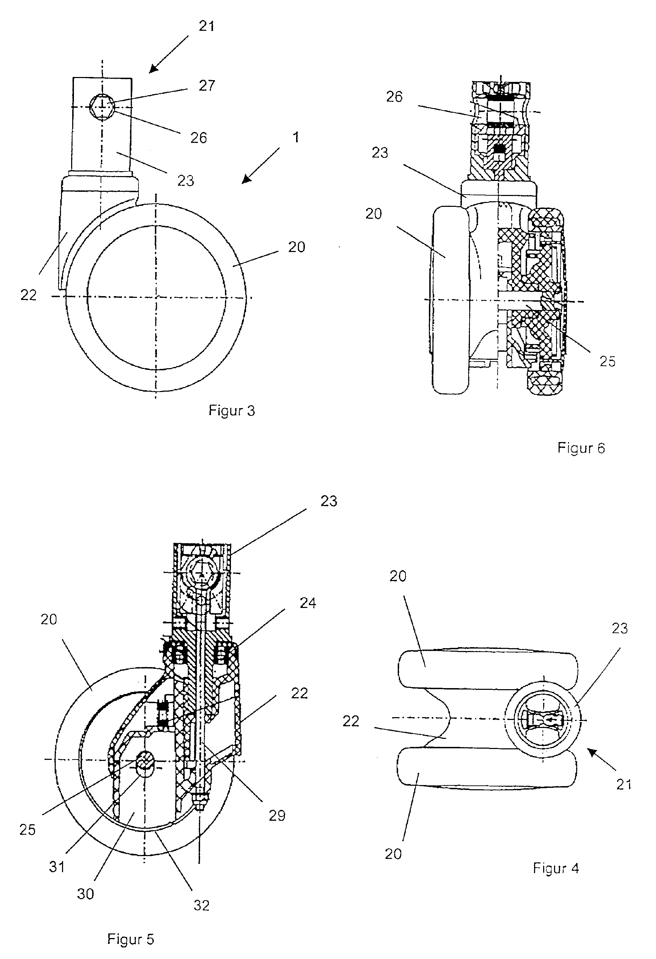

Die Figuren 4 bis 6 zeigen eine zweite Ausgestaltungsform der Erfindung. Wie die Seitenansicht nach Figur 3 sowie die Draufsicht von oben nach Figur 4 zeigen, ist die Tragrolle 1 aus Laufrädern 20 und einer Trageinheit 21 gebildet. Die Trageinheit 21 besteht ihrerseits aus einem Basisteil 22 und einem Einsteckteil 23. Das Basisteil 22 und das Einsteckteil 23 sind mittels eines Lagers 24, welches am deutlichsten Figur 5 entnommen werden kann, relativ zueinander verdrehbar angeordnet. Die beiden Laufräder 20 sind drehbar auf einer gemeinsamen Welle 25 gelagert, die das Basisteil 22 durchragt und von diesem aufgenommen wird. Nach einer Befestigung der Tragrolle 1 an einem Bett, ist ausschließlich das Einsteckteil 23 festgelegt. Das Basisteil 22 ist samt den am Basisteil 22 angeordneten Laufrädern 20 um die Hochachse, d.h. über das Lager 24, drehbar gelagert, wobei die Laufräder 20 zudem ihrerseits um die Welle 25 drehbar angeordnet sind.

Das Einsteckteil 22 weist an seinem oberen Ende eine Durchgangsbohrung 26 auf. Durch diese Durchgangsbohrung 26 ist eine Sechskant-Welle 27 geführt. Ein in Höhenrichtung 28 innerhalb des Einsteckteils 23 verschiebbar geführter Führungsstift 29 ist kraftübertragend an die Sechskant-Welle 27 derart gekoppelt, daß eine Drehbewegung der Sechskant-Welle 27 in eine translatorische Bewegung des Führungsstifts 29 überführt wird. Der Führungsstift 29 weist an seinem der Sechskant-Welle 27 gegenüberliegendem Ende ein Bremsmittel 30 auf. Das Bremsmittel 30 ist gleichfalls in Höhenrichtung 28 verschiebbar gelagert und folgt den durch den Führungsstift 29 vorgegebenen Bewegungen. Wie insbesondere Figur 5 entnommen werden kann, ist die Verfahrbarkeit des Bremsmittels 30 dadurch realisiert, daß dieses über ein in Höhenrichtung 28 ausgerichtetes Langloch 31 auf der Welle 25 gelagert ist. Eine Verschiebung in einer quer zur Höhenrichtung 28 verlaufenden Richtung ist so unterbunden, gleichwohl ist auf einfache Weise eine Verschiebung in Höhenrichtung 28 möglich. Das Bremsmittel 30 ist vom Basisteil 22 nach Art einer Verkleidung umgeben und schützt dieses vor äußeren Einflüssen, wie z.B. vor Staub und Dreck einerseits sowie vor mechanischen Schlageinwirkungen und der dergleichen andererseits.

Figur 5 zeigt die erfindungsgemäße Feststellbremse in gelöstem Zustand. Soll diese nun betätigt werden, so ist der in dieser Figur nicht dargestellt Elektromotor in Gang zu setzen. Dies erfolgt über eine gleichfalls nicht in der Figur gezeigte Steuereinheit. Mit Betätigung des Motors wird die Sechskant-Welle 27 in Drehbewegung versetzt und überführt den Führungsstift 29 in eine in Richtung auf den Boden gerichtete Bewegung. Hierdurch wird auch das Bremsmittel 30 nach unten verfahren und gegen eine korrespondierend ausgebildete Bremsfläche 32 gedrückt. Die Bremsfläche 32 ist innenseitig der Laufräder 20 angeordnet und wird vom Basisteil 22 schützend umgeben. Das Bremsmittel 30 ist federbelastet, so daß ein Wiederhochverfahren des Führungsstiftes 29 ein Lösen der Bremse bewirkt.

Die Figuren 7 und 8 zeigen schematisch ein in der Höhe verstellbares Bett 13. Das Bett besteht im wesentlichen aus einem Bettrahmen 14, einem Bettgestell 15 sowie Tragstützen 16, die mittels entsprechender Hubmotoren relativ zum Bettgestell 15 verfahren werden können. Bodenseitig verfügen die Tragstützen 16 jeweils über eine Tragrolle 1. Figur 7 zeigt das Bett 13 in einer zum Boden 17 parallel ausgerichteten Position. Figur 8 zeigt das Bett 13 in einer Schrägstellung. Die in Zeichnungsebene rechte Tragstütze 16 ist zumindest teilweise ausgefahren, wohingegen sich die linke Tragstütze 16 nach wie vor in ihrer eingefahren Stellung befindet. Bei einem Vergleich der beiden Darstellungen gemäß der Figuren 7 und 8 ist unschwer zu erkennen, daß der horizontale Abstand der beiden Tragstützen 16 zueinander mit zunehmender Schrägstellung des Bettes 13 anwächst. Um den Vorgang der Schrägstellung sicher zu gestalten und um gleichzeitig zu gewährleisten, daß der Unterboden keinen Schaden nimmt, sind die Tragrollen 1 der einen Tragstütze 16 festzustellen, die Tragrollen 1 der anderen Tragstütze 16 sind hingegen zu lösen. Auf die Weise wird eine Vergrößerung des horizontalen Abstandes zwischen den Tragstützen 16 ermöglicht.

### Bezugszeichenliste

- 1: Tragrolle
- 2: Welle
- 3: Wellenlager
- 4: Druckbolzen
- 5: Bolzenlager
- 6: Feder
- 7: Bremsklotz
- 8: Dreharm
- 9: Drehbewegung
- 10: Drehpunkt
- 11: Bolzenbewegung
- 12: Gehäuse
- 13: Bett
- 14: Bettrahmen
- 15: Bettgestell
- 16: Tragstütze
- 17: Boden
- 20: Laufrad
- 21: Trageinheit
- 22: Basisteil
- 23: Einsteckteil
- 24: Lager
- 25: Welle
- 26: Bohrung
- 27: Sechskant-Welle
- 28: Höhenrichtung
- 29: Führungsstift
- 30: Bremsmittel
- 31: Langloch
- 32: Bremsfläche

## Patentansprüche

1. Bett, insbesondere Kranken- und/oder Pflegebett, mit zumindest um die Längsachse drehbar gelagerten Tragrollen, **gekennzeichnet durch** eine mittels Motor antreibbare und auf wenigstens zwei Tragrollen zugleich einwirkende Feststellbremse.

2. Bett nach Anspruch 1, **dadurch gekennzeichnet, daß** mehrere Tragrollen zu einer Tragrolleneinheit zusammengefaßt sind und für jede Tragrolleneinheit jeweils eine Feststellbremse vorgesehen ist.

3. Bett nach Anspruch 2, **dadurch gekennzeichnet, daß** eine Tragrolleneinheit aus einem zwei Tragrollen aufweisenden Tragrollenpaar gebildet ist.

4. Bett nach Anspruch 3, **dadurch gekennzeichnet, daß** die quer zur Liegerichtung des Bettes einander gegenüberliegenden Tragrollen jeweils ein Tragrollenpaar bilden.

5. Bett nach einem der Ansprüche 1 bis 4, **dadurch gekennzeichnet, daß** für jede Feststellbremse jeweils ein separat steuerbarer Antriebsmotor vorgesehen ist.

6. Bett nach einem der Ansprüche 1 bis 4, **dadurch gekennzeichnet, daß** jede Feststellbremse jeweils über einen aus Getriebe und/oder Kupplung bestehenden Antriebsstrang separat steuerbar ist.

7. Bett nach einem der vorhergehenden Ansprüche, **dadurch gekennzeichnet, daß** zwei jeweils eine Tragrolleneinheit und eine Feststellbremse aufweisende Bremseinheiten miteinander gekoppelt und über eine zentrale Steuereinheit bedienbar sind

8. Bett nach einem der vorhergehenden Ansprüche, **dadurch gekennzeichnet, daß** die Steuereinheit für eine Bedienperson leicht zugänglich angeordnet ist.

9. Bett nach einem der vorhergehenden Ansprüche, **dadurch gekennzeichnet, daß** die Feststellbremse eine drehbar gelagerte Welle aufweist, die im Bereich ihrer beiden längsseitigen Endabschnitte kraftübertragend an jeweils einen die Drehbewegung der Tragrolle blockierenden Druckbolzen gekoppelt ist.

10. Bett nach Anspruch 9, **dadurch gekennzeichnet, daß** die Welle als Exzenterwelle ausgebildet ist.

11. Bett nach Anspruch 9, **dadurch gekennzeichnet, daß** die Druckbolzen einer jeden Tragrolle federentlastet gelagert sind.

12. Bett nach einem der Ansprüche 9 bis 11, **dadurch gekennzeichnet, daß** die Druckbolzen tragrollenseitig mit jeweils einer Bremsbacke versehen sind.

13. Bett nach Anspruch 12, **dadurch gekennzeichnet, daß** die Bremsbacke als auswechselbarer Gummiklotz ausgebildet ist, dessen Bremsfläche im wesentlichen korrespondierend zur Außenkontur der Tragrolle ausgebildet ist.

14. Bett nach einem der Ansprüche 1 bis 9, **dadurch gekennzeichnet, daß** die Feststellbremse eine drehbar gelagerte Sechskant-Welle aufweist, die im Bereich ihrer beiden längsseitigen Endabschnitte kraftübertragend an jeweils einen mit einem Bremsmittel versehen und in radialer Richtung zur Tragrolle gleitend gelagerten Führungsstift gekoppelt ist.

15. Bett nach einem der Ansprüche 1 bis 9 und 14, **dadurch gekennzeichnet, daß** die Bremsmittel innenseitig auf korrespondierend ausgebildete Bremsfläche der Tragrollen einwirken.
